# EUROPEAN PATENT SPECIFICATION

(11) **EP 4 171 120 B1**
(45) Date of publication and mention of the grant of the patent: **29.04.2026**
(21) Application number: 21828460.2
(22) Date of filing: 25.02.2021
(51) Int. Cl.: H04W 36/00

(54) **MIGRATION METHOD UNDER HYBRID NETWORKING, STORAGE MEDIUM, AND ELECTRONIC DEVICE**
MIGRATIONSVERFAHREN UNTER HYBRIDER VERNETZUNG, SPEICHERMEDIUM UND ELEKTRONISCHE VORRICHTUNG
PROCÉDÉ DE MIGRATION DANS UN MODE DE RÉSEAUTAGE HYBRIDE, SUPPORT DE STOCKAGE ET DISPOSITIF ÉLECTRONIQUE

(30) Priority: 23.06.2020 CN 202010581477
(43) Date of publication of application: 26.04.2023
(73) Proprietor: ZTE Corporation, Shenzhen, Guangdong 518057 (CN)
(72) Inventor: LI, Wei, Shenzhen, Guangdong 518057 (CN); HE, Jinzhao, Shenzhen, Guangdong 518057 (CN); HU, Min, Shenzhen, Guangdong 518057 (CN)
(74) Representative: Zoli, Filippo
(86) International application number: PCT/CN2021/077908
(87) International publication number: WO 2021/258761

(56) References cited:
- WO-A1-2019/004667
- WO-A1-2019/072902
- WO-A1-2019/072902
- WO-A1-2020/032845
- CN-A- 108 696 881
- CN-A- 110 856 226
- CN-A- 110 972 331
- CN-A- 111 132 210

## Description

### TECHNICAL FIELD

The present invention relates to the field of mobile communication, and more particularly, to a method of migrating from non-standalone (NSA) to standalone (SA) under NSA and SA hybrid networking, a storage medium, and an electronic device.

### BACKGROUND

With the development of mobile communication technologies, 5G has gradually entered a commercial stage. Considering construction costs, a 5G network will continue to evolve on the basis of existing network architectures. For example, network capacity and access transmission rate are increased by synergistically integrating cellular networks with different coverages, thereby improving network coverage quality or increasing system throughput.

However, because a cell radius of a 5G base station is reduced compared with that of a 4G base station, movement of users may lead to more frequent cell handover. In this case, because mobility management of the users becomes more complex than that of a 4G network, it may be difficult to guarantee quality of network service in some scenarios. For example, in the scenario of non-standalone (NSA) and standalone (SA) hybrid networking, a terminal is dual-connected to a new radio (NR) cell supporting NSA while accessing a long-term evolution (LTE) cell. When the terminal moves to a particular location, there may be a NR neighbor cell having better signal quality and supporting SA. At this moment, if the NR neighbor cell supporting the SA does not support dual connection, the terminal cannot be attached to the NR neighbor cell having better signal quality by changing a secondary cell. On the one hand, because the terminal supporting NSA access does not meet a handover condition, the terminal supporting the NSA access cannot be migrated to the NR neighbor cell. On the other hand, because the terminal supporting the NSA access is subjected to co-channel interference of the NR neighbor cell, the terminal supporting the NSA access cannot enjoy 5G high-speed service experience, thereby having a negative effect on user experience.

WO2019/072902A1 discloses a wireless device configured to acquire network support information associated with a neighbor cell, wherein the network support information indicates that the neighbor cell supports a Stand-Alone (SA) mode of operation and/or a Non-Stand-Alone (NSA) mode of operation; and transmit to a serving network node a report comprising identification information associated with the neighbour cell and the network support information indicating that the neighbor cell supports a SA mode of operation and/or a NSA mode of operation.

### SUMMARY

The invention is defined by the claims.

The following is an overview to the subject described in detail herein. This overview is not intended to limit the scope of protection, as defined by the claims. Other embodiments, implementations and aspect not falling within the scope of the claims are mentioned in the following as examples deemed useful for understanding the invention.

In one aspect, embodiments of the present invention provide a migration method under hybrid networking, applied to an NR-side base station in non-standalone (NSA), including following steps: delivering co-channel interference measurement to a mixed-mode terminal according to a configuration for a co-channel interference measurement parameter; determining, on the basis of NR neighbor cell measurement information reported by the mixed-mode terminal, whether a corresponding NR neighbor cell supports NSA access; and sending, to an LTE-side base station in the NSA, a determination result indicating whether the NR neighbor cell supports NSA access, such that the LTE-side base station triggers, on the basis of the determination result and in response to a signal state of the corresponding NR neighbor cell satisfying a handover condition, the mixed-mode terminal to migrate to the corresponding NR neighbor cell.

Correspondingly, the embodiments of the present invention provide a migration method under hybrid networking, applied to an LTE-side base station in non-standalone (NSA), including following steps: receiving a determination result indicating whether a corresponding NR neighbor cell supports NSA access sent by an NR-side base station in the NSA, where the NR-side base station is configured to deliver co-channel interference measurement to a mixed-mode terminal and determine, on a basis of NR neighbor cell measurement information reported by the mixed-mode terminal, whether the corresponding NR neighbor cell supports NSA access; detecting a signal state of the corresponding NR neighbor cell, and comparing the signal state with a handover condition; and on the basis of the determination result and in response to the signal state of the corresponding NR neighbor cell satisfying the handover condition, triggering the mixed-mode terminal to migrate to the corresponding NR neighbor cell.

In another aspect, the embodiments of the present invention provide a migration method under hybrid networking, applied to a mixed-mode terminal dual-connected to NSA, including following steps: connecting to an NR-side base station in the NSA to receive co-channel interference measurement delivered by the NR-side base station; searching NR neighbor cells of a current location, and reporting measurement information of a corresponding NR neighbor cell satisfying a threshold condition to the NR-side base station, where the NR-side base station is configured to send a determination result indicating whether the corresponding NR neighbor cell supports NSA access to an LTE-side base station in the NSA based on the measurement information; and on the basis of the determination result, migrating to the corresponding NR neighbor cell in response to a handover instruction sent by the LTE-side base station in the NSA.

In yet another aspect, the embodiments of the present invention provide an electronic device, which includes: a memory configured to store programs; and a processor configured to execute the programs stored in the memory, where the processor, when executing the programs stored in the memory, is configured to perform the migration method under hybrid networking as described above.

In still another aspect, the embodiments of the present invention provide a storage medium storing computer-executable instructions which, when executed by a processor of an NR-side base station in NSA or by a processor of an LTE-side base station in NSA or by a processor of a mixed-mode terminal dual-connected to NSA, cause the NR-side base station, the LTE-side base station in NSA or the mixed-mode terminal to implement the above corresponding migration method under hybrid networking.

Features and advantages of the present invention will be set forth in the specification which follows, and in part will be apparent from the specification, or may be learned by implementing the present invention. Objectives and other advantages of the present invention may be implemented and obtained by structures particularly indicated in the specification, the claims and the accompanying drawings.

### BRIEF DESCRIPTION OF DRAWINGS

The accompanying drawings are provided for further understanding the technical schemes of the present invention and constitute a part of the specification, and, together with the embodiments of the present invention, are provided to interpret the technical schemes of the present invention, rather than limiting the technical schemes of the present invention.
FIG. 1 is a schematic diagram of a connection architecture in a scenario of hybrid networking;
FIG. 2 is a flowchart of a migration method of an NR-side base station applied to NSA according to an embodiment of the present invention;
FIG. 3 is a schematic diagram of migration of an NR-side base station applied to NSA according to an embodiment of the present invention;
FIG. 4 is another schematic diagram of migration of an NR-side base station applied to NSA according to an embodiment of the present invention;
FIG. 5 is a schematic diagram of a connection state of NR neighbor cells stored in an NR-side base station according to an embodiment of the present invention;
FIG. 6 is a flowchart of a migration method of an LTE-side base station applied to NSA according to an embodiment of the present invention;
FIG. 7 is a schematic diagram of migration of an LTE-side base station applied to NSA according to an embodiment of the present invention;
FIG. 8 is a schematic diagram of a connection state of NR neighbor cells stored in an LTE-side base station according to an embodiment of the present invention;
FIG. 9 is a flowchart of a migration method of a mixed-mode terminal applied to NSA according to an embodiment of the present invention;
FIG. 10 is a schematic structural diagram of a base station according to an embodiment of the present invention; and
FIG. 11 is a schematic structural diagram of a mobile mixed-mode terminal according to an embodiment of the present invention.

### DETAILED DESCRIPTION

Detailed description of the present invention is further made below with reference to drawings and embodiments to make the objectives, technical schemes and advantages of the present invention more apparent. It is to be understood that the embodiments set forth herein are merely intended to explain the present invention, and are not restrictive of the present invention.

It should be understood that in the description of the embodiments of the present invention, a plurality of (multiple) means two or more; and the terms such as greater than, less than and more than are construed as exclusive of the numerical value stated, and the terms such as above, below and within are construed as inclusive of the numerical value stated. The "first" and "second" in the description are merely intended to distinguish technical features, and cannot be construed as indicating or implying a relative importance or implicitly indicating a number of indicated technical features or implicitly indicating a sequence relationship of the indicated technical features.

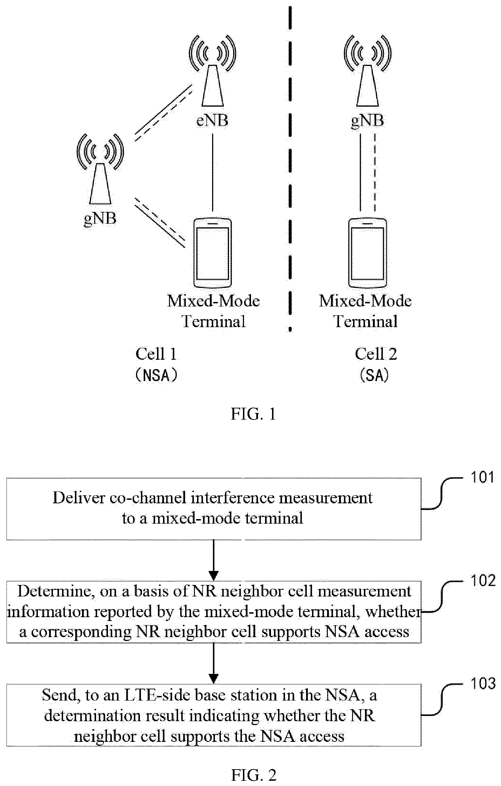

For the architecture of the 5G network, to save the initial cost and reuse the existing devices as much as possible, operators generally lay the 5G network by means of NSA and SA hybrid networking. Referring to the network architecture diagram shown in FIG. 1, on the one hand, the original 4G base station (evolved node B (eNB)) or the modified enhanced 4G base station in the 4G network is connected to a mixed-mode terminal supporting NSA/SA access, such as a mobile phone or a tablet personal computer. On the other hand, some data in a user plane that causes bottlenecks to the 4G base station is migrated to a 5G base station (gNB). The mixed-mode terminal needs to be connected to the 5G base station supporting the NSA to receive/send these data, while control plane data and other user plane data continue to be sent/received by means of the 4G base station. Thus, a cell (an NSA cell) under hybrid networking of the 4G base station (or enhanced 4G base station) and the 5G base station supporting the NSA is formed. Meanwhile, because a cell radius of the 5G base station is reduced compared with that of the 4G base station, it is needed to lay 5G base stations that merely support the SA, and these new 5G base stations separately form a standalone cell (an SA cell).

In some embodiments, according to a current plan, the LTE-side base station and the NR-side base station under an option3x architecture are simultaneously covered. Referring to FIG. 1, the LTE-side base station eNB and the NR-side base station gNB constitute the NSA. A neighbor cell relationship is established between the NR-side base station gNB and the LTE-side base station eNB within the coverage of the NR-side base station gNB and the coverage of the LTE-side base station eNB. In this way, a cell 1 has NSA networking capability. In addition, a cell 2 that does not support NSA networking is adjacent to the cell 1 composed of the LTE-side base station eNB and the NR-side base station gNB. The cell 2 supports NS networking but does not support NSA networking. In the existing technology, the mixed-mode terminal may measure signal strength of the cell 1 of NSA networking and signal strength of the cell 2 of SA networking, and may select the cell with stronger signal strength to access. In this way, the following situations may occur: because the signal strength of the cell 2 of SA networking is stronger, a mobile terminal may access the cell 2 of SA networking (i.e., an anchor cell), but does not access the cell 1 of NSA networking. However, because the mixed-mode terminal is migrated from the cell 1 of NSA networking to the anchor cell of SA networking, an Inter-RAT handover process needs to be enabled and corresponding signaling overhead is consumed, thereby reducing user experience of other mobile terminals supporting the NSA in the cell 1 of NSA networking.

Therefore, movement of users may lead to more frequent handover of the mixed-mode terminal (such as handover between different 5G base stations within the NSA cell, and handover of base stations between the NSA cell and the SA cell). In this case, mobility management of the users becomes more complex than before. In some scenarios, it may be difficult to guarantee the quality of network service because the mixed-mode terminal cannot be smoothly handed over to the corresponding base station to receive/send data.

On this basis, in various embodiments of the present invention, in the scenario of SA and NSA hybrid networking, the LTE/NR side cooperates together to complete the migration of the mixed-mode terminal from an NSA dual-connection state to the NR neighbor cell of the SA with as few signaling overhead as possible while ensuring a peak traffic of terminal users.

### Embodiment I

This embodiment provides a migration method under hybrid networking, which is applied to an NR-side base station in NSA. As shown in FIG. 2, the method includes following steps.

At Step 101, co-channel interference measurement is delivered to a mixed-mode terminal.

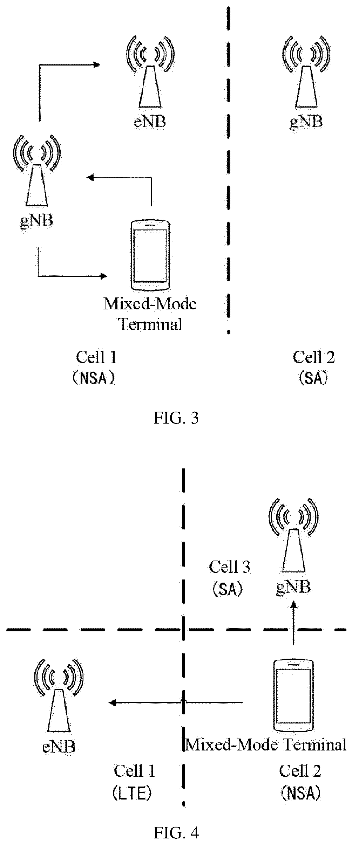

Here, reference is made to a data flow diagram shown in FIG. 3. In this embodiment, the cell 1 supports an NSA attribute, and the cell 2 supports an SA attribute. The cell 1 has one LTE-side base station eNB and one NR-side base station gNB. The cell 2 also has one NR-side base station gNB. After the mixed-mode terminal implements dual connection in the NSA cell, the NR-side base station (i.e., a gNB base station in FIG. 3, which is a 5G base station supporting the NSA) of this cell can uniformly deliver co-channel interference measurement to the mixed-mode terminal according to configuration of a co-channel interference measurement parameter. Accordingly, the LTE-side base station in the NSA cell does not repeatedly deliver the co-channel interference measurement to the mixed-mode terminal any more. The mixed-mode terminal may search a co-channel NR neighbor cell near its location and report measurement information of the NR neighbor cell to the NR-side base station. The mixed-mode terminal supports NSA/SA access. At this moment, because it is avoided that the LTE-side base station directly delivers Inter-RAT measurement to the mixed-mode terminal, the peak traffic of the mixed-mode terminal itself may always be maintained during the whole handover process.

At Step 102, it is determined, on the basis of NR neighbor cell measurement information reported by the mixed-mode terminal, whether a corresponding NR neighbor cell supports the NSA access.

At Step 103, a determination result indicating whether the NR neighbor cell supports the NSA access is sent to the LTE-side base station in the NSA.

In practical application, the NR-side base station may separately configure related parameters of the co-channel interference measurement. After receiving the NR neighbor cell measurement information reported by the mixed-mode terminal, the NR-side base station may determine, on the basis of the NR neighbor cell measurement information, whether it supports an NSA access attribute.

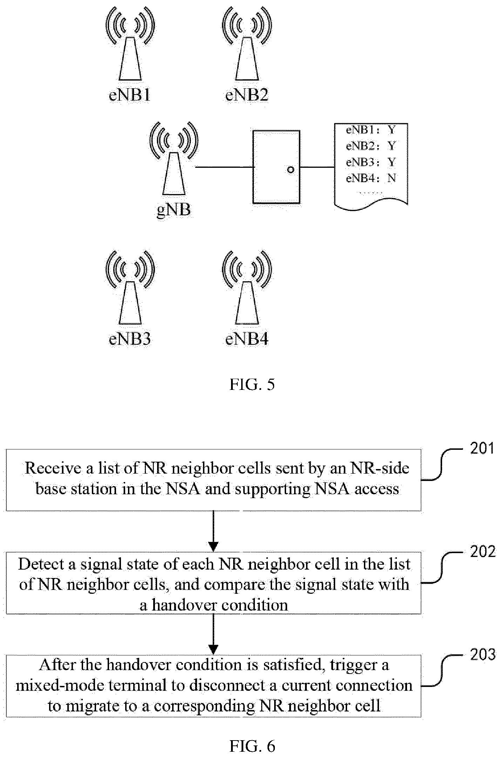

In practical application, referring to the schematic diagram shown in FIG. 5, the NR-side base station is connected to a background, configures an NR neighbor cell relationship according to the NR neighbor cell measurement information reported by the mixed-mode terminal, and identifies whether the NR neighbor cell supports the NSA attribute.

Returning to the schematic diagram shown in FIG. 4, when the NR neighbor cell is determined not to support the NSA access (i.e., the 5G base station gNB in the cell 2 merely supports the SA access), the mixed-mode terminal cannot be attached to the NR cell by means of an SnChange process (the NSA changes the secondary cell). Therefore, the NR-side base station in the cell 1 may notify the NR neighbor cell that does not support the NSA access to the LTE-side base station (for example, the base station eNB shown in FIG. 4) of the same cell. On the contrary, when the NR neighbor cell is determined to support the NSA access (i.e., the 5G base station gNB in the cell 2 supports the NSA access), the mixed-mode terminal may be attached to the NR cell by triggering the SnChange process. Triggering the SnChange process belongs to a standard process stipulated by an agreement. In some embodiments, the NR-side base station may notify the NR neighbor cell supporting dual connection obtained by measurement to the LTE-side base station in the NSA cell by means of an SgNBChangeRequired information source, thereby triggering the LTE-side base station to perform a leg-changing operation (replacing the attached NR secondary cell), i.e., the SnChange process.

In practical application, the NR-side base station in the cell 1 may send the determination result (for example, the determination result indicating that the NR neighbor cell does not support the NSA access) to the LTE-side base station in the cell 1 by newly adding an X2 signaling SN Status Transfer message. As an alternative, the NR-side base station in the cell 1 may also send the determination result to the LTE-side base station in the cell 1 by multiplexing a secondary node handover request message. At this moment, when the mixed-mode terminal is migrated into a cell that does not support the NSA, an LTE eNB1 initiates an SN leg-breaking and Inter-RAT handover process. On the contrary, when the mixed-mode terminal is migrated into a cell supporting the NSA, the mixed-mode terminal may be attached by changing the NSA secondary cell. Therefore, part of the NSA secondary cell changing process is reused in the above process, thereby reducing the signaling overhead compared with the original Inter-RAT handover process.

### Embodiment II

This embodiment provides a migration method under hybrid networking, which is applied to an NR-side base station in NSA. As shown in FIG. 2, the method includes following steps.

At Step 101, co-channel interference measurement is delivered to a mixed-mode terminal.

Here, reference is made to the data flow diagram shown in FIG. 4. Different from the application scenario of Embodiment I, in this embodiment, the cell 1 is an LTE cell. The cell 2 supports the NSA attribute. A cell 3 merely supports the SA attribute (that is, the cell 3 does not support the NSA access, so the cell 3 cannot be handed over by means of the SnChange process, but co-channel interference may also be generated in the part with the same coverage as a co-channel neighbor cell). The cell 1 has one LTE-side base station eNB. The cell 3 has one NR-side base station gNB. After the mixed-mode terminal implements dual connection in the cell supporting the NSA attribute, the NR-side base station (i.e., the gNB base station in FIG. 4, which is a 5G base station supporting the NSA) may uniformly deliver co-channel interference measurement to the mixed-mode terminal according to configuration of a co-channel interference measurement parameter. Accordingly, the LTE-side base station does not repeatedly deliver the co-channel interference measurement to the mixed-mode terminal any more. The mixed-mode terminal may search a co-channel NR neighbor cell near its location and report measurement information of the NR neighbor cell to the NR-side base station. The mixed-mode terminal supports NSA/SA access. At this moment, because it is avoided that the LTE-side base station directly delivers Inter-RAT measurement to the mixed-mode terminal, the peak traffic of the mixed-mode terminal itself can always be maintained during the whole handover process.

At Step 102, it is determined, on the basis of NR neighbor cell measurement information reported by the mixed-mode terminal, whether a corresponding NR neighbor cell supports the NSA access.

At Step 103, a determination result indicating whether the NR neighbor cell supports the NSA access is sent to the LTE-side base station in the NSA.

In practical application, the NR-side base station may separately configure related parameters of the co-channel interference measurement. After receiving the NR neighbor cell measurement information reported by the mixed-mode terminal, the NR-side base station may determine, on the basis of the NR neighbor cell measurement information, whether it supports an NSA access attribute.

In practical application, referring to the schematic diagram shown in FIG. 5, the NR-side base station is connected to a background, configures an NR neighbor cell relationship according to the NR neighbor cell measurement information reported by the mixed-mode terminal, and identifies whether the NR neighbor cell supports the NSA attribute.

Returning to the schematic diagram shown in FIG. 4, when the NR neighbor cell is determined not to support the NSA access (e.g. the cell 1), the mixed-mode terminal cannot be attached to the NR cell by means of an SnChange process (the NSA changes the secondary cell). Therefore, the NR-side base station in the cell 1 may notify the NR neighbor cell that does not support the NSA access to the LTE-side base station (for example, the base station eNB shown in FIG. 4) of the same cell. On the contrary, when the NR neighbor cell is determined to support the NSA access (e.g. the cell 2 supports the NSA access), the mixed-mode terminal may be attached to the NR cell by triggering the SnChange process. Triggering the SnChange process belongs to a standard process stipulated by the agreement. In some embodiments, the NR-side base station may notify the NR neighbor cell supporting dual connection obtained by measurement to the LTE-side base station in the NSA cell by means of an SgNBChangeRequired information source, thereby triggering the LTE-side base station to perform a leg-changing operation (replacing the attached NR secondary cell), i.e., the SnChange process.

In practical application, the NR-side base station in the cell 3 may send the determination result (for example, the determination result indicating that the NR neighbor cell does not support the NSA access) to the LTE-side base station in the cell 1 by newly adding an X2 signaling SN Status Transfer message. As an alternative, the NR-side base station in the cell 3 may also send the determination result to the LTE-side base station in the cell 1 by multiplexing a secondary node handover request message. At this moment, when the mixed-mode terminal is migrated into a cell that does not support the NSA, an LTE eNB1 initiates an SN leg-breaking and Inter-RAT handover process. On the contrary, when the mixed-mode terminal is migrated into a cell supporting the NSA, the mixed-mode terminal may be attached by changing the NSA secondary cell. Therefore, part of the NSA secondary cell changing process is reused in the above process, thereby reducing the signaling overhead compared with the original Inter-RAT handover process.

### Embodiment III

This embodiment provides a migration method under hybrid networking, which is applied to an LTE-side base station in NSA. As shown in FIG. 6, the method includes following steps.

At Step 201, a list of NR neighbor cells supporting NSA access, which is sent by an NR-side base station in the NSA, is received.

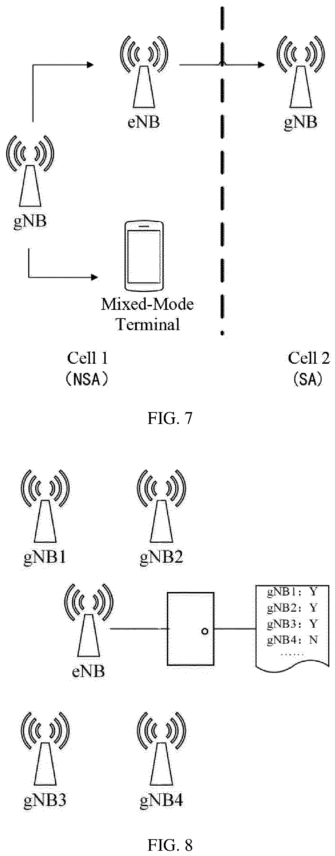

Here, referring to the data flow diagram shown in FIG. 7, in the cell 1 supporting the NSA access, the LTE-side base station (i.e., the base station eNB in the figure, which is a 4G base station or an enhanced 4G base station) receives the above message sent by the NR-side base station (i.e., the base station gNB in the figure, which is a 5G base station), thereby triggering handover determination of the mixed-mode terminal from the NSA to the NR neighbor cell of the SA. The mixed-mode terminal may search a co-channel NR neighbor cell near its location and report measurement information of the NR neighbor cell to the NR-side base station. The NR-side base station forms, based on the measurement information of the NR neighbor cell, the list of NR neighbor cells supporting the NSA access. At this moment, because the LTE-side base station does not directly deliver Inter-RAT measurement to the mixed-mode terminal, the peak traffic of the mixed-mode terminal itself may always be maintained during the whole handover process.

At Step 202, a signal state of each NR neighbor cell in the list of NR neighbor cells is detected, and the signal state is compared with a handover condition.

In practical application, the LTE-side base station may detect the signal quality, available state, load state, neighboring relationship and other conditions of each NR neighbor cell in the list of NR neighbor cells. For example, the signal state may be identified by one of reference signal receiving power (RSRP), reference signal receiving quality (RSRQ), and signal to interference plus noise ratio, or indicated by synthesizing the above signal state parameters.

At Step 203, after the handover condition is satisfied, the mixed-mode terminal is triggered to disconnect a current connection to migrate to a corresponding NR neighbor cell.

The mixed-mode terminal supports NSA/SA access. In practical application, when the LTE-side base station determines, on the basis of the signal quality, the available state, the load state, the neighboring relationship and other conditions of the NR neighbor cell, that the handover condition is satisfied, but the NR cell does not support the NSA access, the LTE-side base station starts to trigger the mixed-mode terminal to disconnect the dual connection, and initiates the SN leg-breaking and Inter-RAT handover process (i.e., handing over from the base station eNB in the current cell to the base station gNB in another cell), to complete the migration of the mixed-mode terminal from the cell 1 supporting the NSA to the cell 2 supporting the SA. On the contrary, when the LTE-side base station determines, on the basis of the signal quality, the available state, the load state, the neighboring relationship and other conditions of the NR neighbor cell, that the handover condition is satisfied, and the NR cell supports the NSA access, the LTE-side base station may trigger the mixed-mode terminal to be attached to an NR cell having better signal quality by changing the NSA secondary cell.

In practical application, referring to the schematic diagram shown in FIG. 8, the LTE-side base station may be connected to the background, configures the NR neighbor cell relationship according to the list of NR neighbor cells supporting the NSA access sent by the NR-side base station in the NSA, and identifies whether the NR neighbor cell supports the NSA attribute.

Returning to the schematic diagram shown in FIG. 7, when the NR neighbor cell is determined not to support the NSA access (i.e., the 5G base station gNB in the cell 2 merely supports the SA access), the mixed-mode terminal cannot be attached to the NR cell by means of an SnChange process (the NSA changes the secondary cell). Therefore, the NR-side base station in the cell 1 may notify the NR neighbor cell that does not support the NSA access to the LTE-side base station (for example, the base station eNB shown in FIG. 7) of the same cell. On the contrary, when the NR neighbor cell is determined to support the NSA access (i.e., the 5G base station gNB in the cell 2 supports the NSA access), the mixed-mode terminal may be attached to the NR cell by triggering the SnChange process. Triggering the SnChange process belongs to a standard process stipulated by the agreement. In some embodiments, the LTE-side base station receives, from the NR-side base station in the NSA cell through the SgNBChangeRequired information source, a notification indicating an NR neighbor cell supporting dual connection, which is obtained through measurement. Thus, the LTE-side base station triggers the leg-changing operation (replacing the attached NR secondary cell), i.e., the SnChange process.

In practical application, the LTE-side base station in the cell 1 may obtain the determination result (for example, the determination result indicating that the NR neighbor cell does not support the NSA access) from the NR-side base station in the cell 1 by newly adding an X2 signaling SN Status Transfer message. As an alternative, the LTE-side base station in the cell 1 may also obtain the determination result from the NR-side base station in the cell 1 by multiplexing a secondary node handover request message. At this moment, part of the NSA secondary cell changing process is reused in the above process, thereby reducing the signaling overhead compared with the original Inter-RAT handover process.

### Embodiment IV

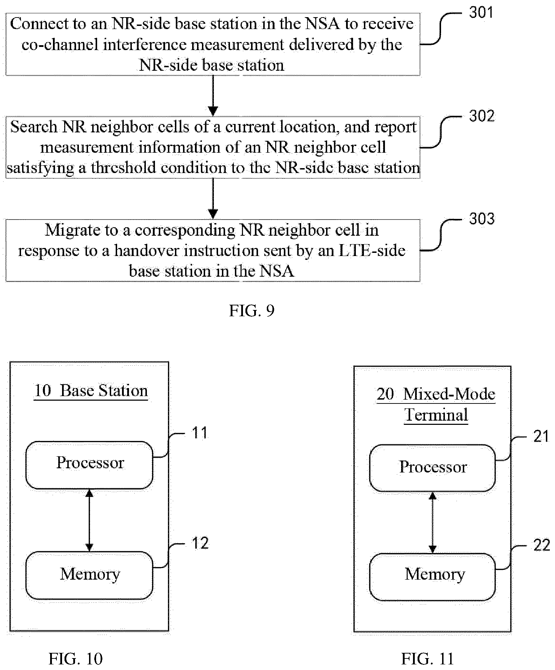

This embodiment provides a migration method under hybrid networking, which is applied to a mixed-mode terminal in NSA. The mixed-mode terminal supports NSA/SA access. As shown in FIG. 9, this method includes following steps.

At Step 301, an NR-side base station in the NSA is connected to receive co-channel interference measurement delivered by the NR-side base station.

Here, referring to the data flow diagram shown in FIG. 4, after the dual connection is implemented in the NSA cell, the mixed-mode terminal may receive the co-channel interference measurement sent, to the mixed-mode terminal, by the NR-side base station (i.e., the gNB base station in FIG. 4, which is a 5G base station supporting the NSA) in the NSA cell. The NR-side base station may separately configure related parameters of the co-channel interference measurement. At this moment, the mixed-mode terminal may search a co-channel NR neighbor cell near its location and report measurement information of the NR neighbor cell to the NR-side base station. After receiving the NR neighbor cell measurement information reported by the mixed-mode terminal, the NR-side base station may determine, on the basis of the NR neighbor cell measurement information, whether it supports an NSA access attribute. During this process, because it is avoided that the LTE-side base station directly delivers Inter-RAT measurement to the mixed-mode terminal, the peak traffic of the mixed-mode terminal itself can always be maintained during the whole handover process.

At Step 302, NR neighbor cells of a current location are searched, and measurement information of an NR neighbor cell satisfying a threshold condition is reported to the NR-side base station.

The threshold condition may include signal quality, available state, load state, neighboring relationship, etc. of the NR neighbor cell. In some embodiments, the threshold condition for determining whether the measurement information is reported may be delivered to the mixed-mode terminal after the base station side is configured, such that the mixed-mode terminal can separately determine, according to the threshold condition, whether the measurement information is reported. When the mixed-mode terminal measures a neighbor cell signal, the mixed-mode terminal may report the measurement information to the NR-side base station if the signal quality satisfies the threshold condition. After receiving the measurement information reported by the mixed-mode terminal, the NR-side base station performs determination according to the measurement information. The measurement information may include neighbor cell signal quality measured by the terminal, and may also include the available state, the neighboring relationship, etc. of the neighbor cell configured on the base station side, and the load state, etc. of the neighbor cell obtained and detected by the base station itself.

At Step 303, the mixed-mode terminal is migrated to a corresponding NR neighbor cell in response to a handover instruction sent by an LTE-side base station in the NSA.

Here, referring to the data flow diagram shown in FIG. 7, in the cell 1 supporting the NSA access, the LTE-side base station (i.e., the base station eNB in the figure, which is a 4G base station or an enhanced 4G base station) receives the above message sent by the NR-side base station (i.e., the base station gNB in the figure, which is a 5G base station), thereby triggering handover determination of the mixed-mode terminal from the NSA to the NR neighbor cell of the SA. The mixed-mode terminal may search a co-channel NR neighbor cell near its location and report measurement information of the NR neighbor cell to the NR-side base station. The NR-side base station forms, based on the measurement information of the NR neighbor cell, the list of NR neighbor cells supporting the NSA access. At this moment, because the LTE-side base station does not directly deliver Inter-RAT measurement to the mixed-mode terminal, the peak traffic of the mixed-mode terminal itself may always be maintained during the whole handover process.

In practical application, referring to the schematic diagram shown in FIG. 5, the NR-side base station is connected to a background, configures an NR neighbor cell relationship according to the NR neighbor cell measurement information reported by the mixed-mode terminal, and identifies whether the NR neighbor cell supports the NSA attribute. As an alternative, referring to the schematic diagram shown in FIG. 8, the LTE-side base station may also be connected to the background, configures the NR neighbor cell relationship according to the list of NR neighbor cells supporting the NSA access sent by the NR-side base station in the NSA, and identifies whether the NR neighbor cell supports the NSA attribute.

In practical application, when the LTE-side base station determines, on the basis of the signal quality, the available state, the load state, the neighboring relationship and other conditions of the NR neighbor cell, that the handover condition is satisfied but the NSA access is not supported, the LTE-side base station starts to trigger the mixed-mode terminal to disconnect the dual connection, and initiates the SN leg-breaking and Inter-RAT handover process (i.e., handing over from the base station eNB in the current cell to the base station gNB in another cell), to complete the migration of the mixed-mode terminal from the cell supporting the NSA to the cell supporting the SA. On the contrary, when the LTE-side base station determines, on the basis of the signal quality, the available state, the load state, the neighboring relationship and other conditions of the NR neighbor cell, that the handover condition is satisfied and the NSA access is supported, the LTE-side base station triggers the mixed-mode terminal to be attached to a cell having better signal quality than the current cell by changing the NSA secondary cell. Therefore, part of the NSA secondary cell changing process is reused in the above process, thereby reducing the signaling overhead compared with the original Inter-RAT handover process.

Returning to the schematic diagram shown in FIG. 7, when the NR neighbor cell is determined not to support the NSA access (i.e., the 5G base station gNB in the cell 2 merely supports the SA access), the mixed-mode terminal cannot be attached to the NR cell by changing the secondary cell by the NSA. Therefore, the NR-side base station in the cell 1 may notify the NR neighbor cell that does not support the NSA access to the LTE-side base station (for example, the base station eNB shown in FIG. 7).

In practical application, the LTE-side base station in the cell 1 may obtain the determination result (for example, the determination result indicating that the NR neighbor cell does not support the NSA access) from the NR-side base station in the cell 1 by newly adding an X2 signaling SN Status Transfer message. As an alternative, the LTE-side base station in the cell 1 may also obtain the determination result from the NR-side base station in the cell 1 by multiplexing a secondary node handover request message.

FIG. 10 shows a base station 10 provided by an embodiment of the present invention. The base station 10 includes a memory 12, a processor 11, and a computer program stored in the memory 12 and runnable on the processor 11. When the base station 10 is the NR-side base station, the computer program is configured to perform the migration method under hybrid networking in the above-mentioned method steps 101 to 103 when running. When the base station 10 is the LTE-side base station, the computer program is configured to perform the migration method under hybrid networking in the above-mentioned method steps 201 to 203 when running.

The processor 11 and the memory 12 may be connected by means of a bus or in other means.

As a non-transitory computer-readable storage medium, the memory 12 may be configured to store non-transitory software programs and non-transitory computer-executable programs, such as the cell handover method described in the embodiments of the present invention. When the base station 10 is the NR-side base station, the processor 11 executes the non-transitory software programs and instructions stored in the memory 12, to implement the migration method under hybrid networking in the method steps 101 to 103 shown in FIG. 2. When the base station 10 is the NR-side base station, the processor 11 executes the non-transitory software programs and instructions stored in the memory 12, to implement the migration method under hybrid networking in the method steps 101 to 103 shown in FIG. 2. When the base station 10 is the LTE-side base station, the processor 11 executes the non-transitory software programs and instructions stored in the memory 12, to implement the migration method under hybrid networking in the method steps 21 to 23 shown in FIG. 6. In practical application, the memory 12 may also store an attribute indicating whether each NR neighbor supports the NSA.

The memory 12 may include a program storage area and a data storage area, where the program storage area may store an application program required by an operating system and at least one function, and the data storage area may store the cell handover method described above. Moreover, the memory 102 may include a high-speed random access memory 12, or may further include a non-transitory memory 12, for example, at least one magnetic disk memory device, a flash memory device, or other non-transitory solid-state memory devices. In some embodiments, the memory 12 may include some memories 12 disposed remotely relative to the processor 11, and these remote memories 12 may be connected to the base station 10 via networks. Instances of the foregoing networks include but are not limited to the Internet, the Intranet, a local area network (LAN), a mobile communication network and a combination thereof.

The non-transitory software programs and the instructions required to implement the migration method under hybrid networking described above are stored in the memory 12. When the base station 10 is the NR-side base station, the non-transitory software programs and the instructions are executed by one or more processors 11 to perform the migration method under hybrid networking in the above method steps 101 to 103. When the base station 10 is the LTE-side base station, the non-transitory software programs and the instructions are executed by one or more processors 11 to perform the migration method under hybrid networking in the above method steps 201 to 203.

FIG. 11 shows a mobile terminal 20 provided by an embodiment of the present invention. The mobile terminal 20 includes a memory 22, a processor 21, and a computer program stored in the memory 22 and runnable on the processor 21. When running, the computer program is configured to perform the migration method under hybrid networking in the above method steps 301 to 303.

The processor 21 and the memory 22 may be connected by means of a bus or in other means.

The embodiments of the present invention also provide a computer-readable storage medium, which stores computer-executable instructions, where the computer-executable instructions are configured to perform the migration method under hybrid networking.

In the embodiments of the present invention, the computer-readable storage medium stores computer-executable instructions that are executed by one or more control processors. For example, when the base station 10 is the NR-side base station, the computer-executable instructions are executed by one processor 11 of the base station 10, to cause the one or more processors 11 to perform the migration handover method under hybrid networking in the above method steps 101 to 103. Alternatively, when the base station 10 is the LTE-side base station, the computer-executable instructions are executed by one processor 11 of the base station 10, to cause the one or more processors 11 to perform the migration handover method under hybrid networking in the above method steps 201 to 203. Alternatively, the computer-executable instructions are executed by one processor 21 of the mobile terminal 20, to cause the one or more processors 201 to perform the migration method under hybrid networking in the above method steps 301 to 303.

The schemes of the embodiments of the present invention solve the problem that the terminal connected to the NSA cannot enjoy the 5G high-speed service experience due to co-channel interference of the NR neighbor cell. The method of the present invention, on the one hand, can reduce the signaling overhead compared with the original Inter-RAT handover process, and on the one hand, can prevent the LTE-side base station from directly sending an Inter-RAT measurement task to the terminal, such that the peak traffic can always be maintained in the whole handover process.

The embodiments set forth above are merely exemplary, where units described as detached parts may be or not be detachable physically, i.e., either located at the same place, or distributed on a plurality of network units. Modules may be selected in part or in whole according to actual needs to achieve objectives of the schemes of this embodiment.

In the embodiments herein, the mixed-mode terminal may refer to a terminal device accessing a mobile network, for example, handheld devices with wireless communication functions, which include terminals inserted into SIM cards or adopting E-SIM technology such as mobile phones, tablet computers, notebook computers, and include computing devices, multimedia devices or other processing devices connected to wireless modems, vehicle-mounted devices, wearable devices, terminals in 5G networks and so on. As an interface device for mobile terminals to implement communication and access to the Internet, the base station may include, but is not limited to, a macro base station, a micro base station, an indoor distributed base station, etc.

Those having ordinary skill in the art may understand that all or some steps or systems in the method disclosed above may be implemented by software, firmware, hardware or any suitable combination thereof. Some or all the physical components may be implemented as software executed by a processor such as a CPU, a digital signal processor or microprocessor, or may be implemented as hardware or an integrated circuit such as an application specific integrated circuit. Such software may be distributed on a computer readable medium, which may include a computer storage medium (or non-transitory storage medium) and a communication medium (or a transitory medium). As well known to those of ordinary skill in the art, the term computer storage media include volatile and nonvolatile, removable and non-removable media implemented in any method or technology for storage of information, such as computer readable instructions, data structures, program modules, or other data. The computer storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and which can be accessed by a computer. Furthermore, as well known to those of ordinary skill in the art, communication media typically include computer-readable instructions, data structures, program modules or other data in a modulated data signal such as a carrier wave or other transport mechanism, and may include any information delivery media.

The embodiments of the present invention are described herein, including preferred embodiments known to the inventors for carrying out the present invention. Variations of these embodiments will become apparent to those of ordinary skill in the art upon reading the foregoing description. The inventors expect those having ordinary skill in the art to employ such variations as appropriate, and the inventors intend that the embodiments of the present invention can be practiced otherwise than described in detail herein.

## Claims

1. A migration method in a scenario of non-standalone, NSA, and standalone, SA, hybrid networking, performed by a long-term evolution, LTE, side base station (10) in NSA, and comprising:
receiving a determination result indicating whether a corresponding NR neighbor cell supports NSA access sent by an NR-side base station in the NSA, wherein the NR-side base station is configured to deliver co-channel interference measurement to a mixed-mode terminal and determine, on a basis of NR neighbor cell measurement information reported by the mixed-mode terminal, whether the corresponding NR neighbor cell supports NSA access;
detecting a signal state of the corresponding NR neighbor cell, and comparing the signal state with a handover condition; and
on the basis of the determination result and in response to the signal state of the corresponding NR neighbor cell satisfying the handover condition, triggering the mixed-mode terminal to migrate to the corresponding NR neighbor cell.

2. The migration method of claim 1, wherein the LTE-side base station is connected to a background to configure an NR neighbor cell relationship and identify whether each NR neighbor cell supports an attribute of the NSA.

3. The migration method of claim 1, wherein the signal state comprises at least one of signal quality, an available state, a load state, and a neighboring relationship.

4. The migration method of claim 1, wherein the mixed-mode terminal is connected to the NSA in a dual-connection manner.

5. The migration method of claim 1, wherein the mixed-mode terminal is triggered by means of an Inter-RAT handover process to disconnect the current connection for migration to the corresponding NR neighbor cell.

6. The migration method of any one of claims 1 to 5, wherein a determination result sent by the NR-side base station in the NSA is received by newly adding X2 signaling.

7. The migration method of any one of claims 1 to 5, wherein a determination result sent by the NR-side base station in the NSA is received by multiplexing a secondary node handover request message.

8. A migration method in a scenario of non-standalone, NSA, and standalone, SA, hybrid networking, performed by an NR-side base station (10) in NSA, and comprising:
delivering co-channel interference measurement to a mixed-mode terminal (101);
determining, on a basis of NR neighbor cell measurement information reported by the mixed-mode terminal, whether a corresponding NR neighbor cell supports NSA access (102); and
sending, to an LTE-side base station in the NSA, a determination result indicating whether the NR neighbor cell supports the NSA access, such that the LTE-side base station triggers, on the basis of the determination result and in response to a signal state of the corresponding NR neighbor cell satisfying a handover condition, the mixed-mode terminal to migrate to the corresponding NR neighbor cell.

9. The migration method of claim 8, wherein the mixed-mode terminal performs co-channel interference measurement on the basis of a co-channel interference measurement parameter separately configured by the NR-side base station.

10. The migration method of claim 8, wherein the mixed-mode terminal is connected to the NSA in a dual-connection manner.

11. A migration method in a scenario of non-standalone, NSA, and standalone, SA, hybrid networking, performed by a mixed-mode terminal (20) dual-connected to NSA, and comprising:
connecting to an NR-side base station in the NSA to receive co-channel interference measurement delivered by the NR-side base station (301);
searching NR neighbor cells of a current location, and reporting measurement information of a corresponding NR neighbor cell satisfying a threshold condition to the NR-side base station (302), in such a way to enable the NR-side base station to send a determination result indicating whether the corresponding NR neighbor cell supports NSA access to an LTE-side base station in the NSA based on the measurement information; and
on the basis of the determination result, migrating to the corresponding NR neighbor cell in response to a handover instruction sent by the LTE-side base station in the NSA.

12. The migration method of claim 11, wherein in response to an NR neighbor cell having better signal quality than a current NR cell being found, the signal quality of the NR neighbor cell is compared with the threshold condition.

13. A computer-readable storage medium, comprising a stored program which, when executed by a processor, wherein the stored program causes an LTE-side base station in NSA to perform all the steps of the migration method of any one of claims 1 to 7 when executed by a processor associated with the LTE-side base station; or causes an NR-side base station in NSA to perform all the steps of the migration method of any one of claims 8 to 10 when executed by a processor associated with the NR-side base station; or causes a mixed-mode terminal dual-connected to NSA to perform all the steps of the migration method of any one of claims 11 to 12 when executed by a processor associated with the mixed-mode terminal.

14. An LTE-side base station (10), comprising a memory (12), a processor (11), and a computer program stored on the memory (12) and executable by the processor (11) which, when executed by the processor, causes the LTE-side base station (10) to perform the migration method of any one of claims 1 to 7.

15. An NR-side base station (10), comprising a memory (12), a processor (11), and a computer program stored on the memory (12) and executable by the processor (11) which, when executed by the processor, causes the NR-side base station (10) to perform the migration method of any one of claims 8 to 10.

16. A mobile mixed-mode terminal (20), comprising a memory, (22) a processor (21), and a computer program stored on the memory (22) and executable by the processor (21) which, when executed by the processor (21), causes the mobile mixed-mode terminal (20) to perform, the migration method of any one of claims 11 to 12.

## Patentansprüche

1. Migrationsverfahren in einem Szenario eines Non-Standalone-, NSA, und Standalone-, SA, hybriden Netzes, das von einer Long-Term-Evolution-, LTE, seitigen Basisstation (10) NSA durchgeführt wird, und umfassend:
Empfangen eines Bestimmungsresultats, das angibt, ob eine entsprechende NR-Nachbarzelle NSA-Zugang unterstützt, das von einer NR-seitigen Basisstation in dem NSA gesendet wird, wobei die NR-seitige Basisstation konfiguriert ist, um eine Gleichkanalstörungsmessung an ein Mischbetrieb-Endgerät zu liefern und basierend auf NR-Nachbarzellen-Messinformationen, die von dem Mischbetrieb-Endgerät gemeldet werden, zu bestimmen, ob die entsprechende NR-Nachbarzelle NSA-Zugang unterstützt;
Erfassen eines Signalzustands der entsprechenden NR-Nachbarzelle und Vergleichen des Signalzustands mit einer Übergabebedingung; und
basierend auf dem Bestimmungsresultat und als Reaktion auf den Signalzustand der entsprechenden NR-Nachbarzelle, die die Übergabebedingung erfüllt, Auslösen des Mischbetrieb-Endgeräts, um zu der entsprechenden NR-Nachbarzelle zu migrieren.

2. Migrationsverfahren nach Anspruch 1, wobei die LTE-seitige Basisstation mit einem Hintergrund verbunden ist, um eine NR-Nachbarzellenbeziehung zu konfigurieren und zu identifizieren, ob jede NR-Nachbarzelle ein Attribut des NSA unterstützt.

3. Migrationsverfahren nach Anspruch 1, wobei der Signalzustand mindestens eines von Signalqualität, einem verfügbaren Zustand, einem Lastzustand und einer Nachbarschaftsbeziehung umfasst.

4. Migrationsverfahren nach Anspruch 1, wobei das Mischbetrieb-Endgerät auf eine Doppelverbindungsweise mit dem NSA verbunden ist.

5. Migrationsverfahren nach Anspruch 1, wobei das Mischbetrieb-Endgerät mittels eines Inter-RAT-Übergabeprozesses veranlasst wird, die aktuelle Verbindung zum Migrieren zu der entsprechenden NR-Nachbarzelle zu trennen.

6. Migrationsverfahren nach einem der Ansprüche 1 bis 5, wobei ein Bestimmungsresultat, das von der NR-seitigen Basisstation in dem NSA gesendet wird, durch neu hinzugefügte X2-Signalisierung empfangen wird.

7. Migrationsverfahren nach einem der Ansprüche 1 bis 5, wobei ein Bestimmungsresultat, das von der NR-seitigen Basisstation in dem NSA gesendet wird, durch Multiplexen einer sekundären Knotenübergabe-Anforderungsnachricht empfangen wird.

8. Migrationsverfahren in einem Szenario eines Non-Standalone-, NSA, und Standalone-, SA, hybriden Netzes, durchgeführt von einer NR-seitigen Basisstation (10) in NSA,
und umfassend:
Liefern von Gleichkanalstörungsmessung an ein Mischbetrieb-Endgerät (101);
Bestimmen, basierend auf NR-Nachbarzellen-Messinformationen, die von dem Mischbetrieb-Endgerät gemeldet werden, ob eine entsprechende NR-Nachbarzelle NSA-Zugang (102) unterstützt; und Senden, an eine LTE-seitige Basisstation in dem NSA, eines Bestimmungsresultats, das angibt, ob die NR-Nachbarzelle den NSA-Zugang unterstützt, sodass die LTE-seitige Basisstation basierend auf dem Bestimmungsresultat und als Reaktion auf einen Signalzustand der entsprechenden NR-Nachbarzelle, die eine Übergabebedingung erfüllt, das Mischbetrieb-Endgerät auslöst, um zu der entsprechenden NR-Nachbarzelle zu migrieren.

9. Migrationsverfahren nach Anspruch 8, wobei das Mischbetrieb-Endgerät eine Gleichkanalstörungsmessung basierend auf einem Gleichkanalstörungsmessparameters durchführt, der separat von der NR-seitigen Basisstation konfiguriert wird.

10. Migrationsverfahren nach Anspruch 8, wobei das Mischbetrieb-Endgerät auf eine Doppelverbindungsweise mit dem NSA verbunden ist.

11. Migrationsverfahren in einem Szenario eines Non-Standalone-, NSA, und Standalone-, SA, hybriden Netzes, das von einem Mischbetrieb-Endgerät (20) durchgeführt wird, das doppelt mit NSA verbunden ist, und das Folgendes umfasst:
Verbinden mit einer NR-seitigen Basisstation in dem NSA, um Gleichkanalstörungsmessung zu empfangen, die von der NR-seitigen Basisstation (301) bereitgestellt wird;
Suchen von NR-Nachbarzellen eines aktuellen Standorts und Melden von Messinformationen einer entsprechenden NR-Nachbarzelle, die eine Schwellenwertbedingung erfüllt, an die NR-seitige Basisstation (302), um der NR-seitigen Basisstation zu ermöglichen, ein Bestimmungsresultat zu senden, das angibt, ob die entsprechende NR-Nachbarzelle NSA-Zugang zu einer LTE-seitigen Basisstation in dem NSA basierend auf den Messinformationen unterstützt; und
basierend auf dem Bestimmungsresultat, Migrieren zu der entsprechenden NR-Nachbarzelle als Reaktion auf eine Übergabeanweisung, die von der LTE-seitigen Basisstation in dem NSA gesendet wird.

12. Migrationsverfahren nach Anspruch 11, wobei als Reaktion darauf, dass eine NR-Nachbarzelle gefunden wird, die eine bessere Signalqualität als eine aktuelle NR-Zelle aufweist, die Signalqualität der NR-Nachbarzelle mit der Schwellenwertbedingung verglichen wird.

13. Computerlesbares Speichermedium, umfassend ein gespeichertes Programm, das, wenn es von einem Prozessor ausgeführt wird, eine LTE-seitige Basisstation in NSA veranlasst, alle Schritte des Migrationsverfahrens nach einem der Ansprüche 1 bis 7 durchzuführen, wenn es von einem Prozessor ausgeführt wird, der mit der LTE-seitigen Basisstation assoziiert ist; oder eine NR-seitige Basisstation in NSA veranlasst, alle Schritte des Migrationsverfahrens nach einem der Ansprüche 8 bis 10 durchzuführen, wenn es von einem Prozessor ausgeführt wird, der mit NR-seitigen Basisstation assoziiert ist; oder ein mit NSA doppelt verbundenes Mischbetrieb-Endgerät veranlasst, alle Schritte des Migrationsverfahrens nach einem der Ansprüche 11 bis 12 durchzuführen, wenn es von einem Prozessor ausgeführt wird, der mit dem Mischbetrieb-Endgerät assoziiert ist.

14. LTE-seitige Basisstation (10), umfassend einen Speicher (12), einen Prozessor (11) und ein in dem Speicher (12) gespeichertes und durch den Prozessor (11) ausführbares Computerprogramm, das, wenn es von dem Prozessor ausgeführt wird, die LTE-seitige Basisstation (10) veranlasst, das Migrationsverfahren nach einem der Ansprüche 1 bis 7 durchzuführen.

15. NR-seitige Basisstation (10), umfassend einen Speicher (12), einen Prozessor (11) und ein in dem Speicher (12) gespeichertes und von dem Prozessor (11) ausführbares Computerprogramm, das, wenn es von dem Prozessor ausgeführt wird, die NR-seitige Basisstation (10) veranlasst, das Migrationsverfahren nach einem der Ansprüche 8 bis 10 durchzuführen.

16. Mobiles Mischbetrieb-Endgerät (20), umfassend einen Speicher (22), einen Prozessor (21) und ein in dem Speicher (22) gespeichertes und von dem Prozessor (21) ausführbares Computerprogramm, das, wenn es von dem Prozessor (21) ausgeführt wird, das mobile Mischbetrieb-Endgerät (20) veranlasst, das Migrationsverfahren nach einem der Ansprüche 11 bis 12 durchzuführen.

## Revendications

1. Procédé de migration dans un scénario de réseau hybride non autonome, NSA, et autonome SA, mis en œuvre par une station de base de côté (10) à évolution à long terme, LTE, en NSA, et comprenant :
la réception d'un résultat de détermination indiquant si une cellule voisine NR correspondante prend en charge l'accès NSA envoyé par une station de base côté NR dans le NSA, dans lequel la station de base côté NR est configurée pour fournir une mesure d'interférence cocanal à un terminal à mode mixte et déterminer, sur la base des informations de mesure de la cellule voisine NR rapportées par le terminal à mode mixte, si la cellule voisine NR correspondante prend en charge l'accès NSA ;
la détection d'un état du signal de la cellule voisine NR correspondante, et la comparaison de l'état de signal à une condition de transfert ; et
sur la base du résultat de la détermination et en réponse à l'état du signal de la cellule voisine NR correspondante satisfaisant à la condition de transfert, le déclenchement du terminal à mode mixte pour migrer vers la cellule voisine NR correspondante.

2. Procédé de migration selon la revendication 1, dans lequel la station de base côté LTE est connectée à un arrière-plan pour configurer une relation de cellule voisine NR et identifier si chaque cellule voisine NR prend en charge un attribut du NSA.

3. Procédé de migration selon la revendication 1, dans lequel l'état du signal comprend au moins l'un parmi la qualité du signal, un état disponible, un état de charge et une relation de voisinage.

4. Procédé de migration selon la revendication 1, dans lequel le terminal à mode mixte est connecté au NSA selon un mode à double connexion.

5. Procédé de migration selon la revendication 1, dans lequel le terminal à mode mixte est déclenché au moyen d'un processus de transfert inter-RAT afin de déconnecter la connexion actuelle en vue de la migration vers la cellule voisine NR correspondante.

6. Procédé de migration selon l'une quelconque des revendications 1 à 5, dans lequel un résultat de la détermination envoyé par la station de base côté NR dans le NSA est reçu en ajoutant nouvellement une signalisation X2.

7. Procédé de migration selon l'une quelconque des revendications 1 à 5, dans lequel un résultat de la détermination envoyé par la station de base côté NR dans le NSA est reçu par multiplexage d'un message de demande de transfert de nœud secondaire.

8. Procédé de migration dans un scénario de réseau hybride non autonome, NSA, et autonome SA, mis en œuvre par une station de base de côté NR (10) en mode NSA, et comprenant :
la transmission des mesures d'interférence cocanal à un terminal à mode mixte (101) ;
la détermination, sur la base des informations de mesure de la cellule voisine NR rapportées par le terminal en mode mixte, si une cellule voisine NR correspondante prend en charge l'accès NSA (102) ; et
l'envoi, à une station de base côté LTE dans le NSA, d'un résultat de la détermination indiquant si la cellule voisine NR prend en charge l'accès NSA, de telle sorte que la station de base côté LTE déclenche, sur la base du résultat de la détermination et en réponse à un état de signal de la cellule voisine NR correspondante qui satisfait une condition de transfert, le terminal en mode mixte pour migrer vers la cellule voisine NR correspondante.

9. Procédé de migration selon la revendication 8, dans lequel le terminal à mode mixte effectue une mesure d'interférence cocanal sur la base d'un paramètre de mesure d'interférence cocanal configuré séparément par la station de base côté NR.

10. Procédé de migration selon la revendication 8, dans lequel le terminal à mode mixte est connecté au NSA selon un mode à double connexion.

11. Procédé de migration dans un scénario de réseau hybride non autonome, NSA, et autonome SA, mis en œuvre par un terminal à mode mixte (20) connecté à la fois au réseau NSA et au réseau SA, comprenant :
la connexion à une station de base côté NR dans le NSA afin de recevoir la mesure d'interférence cocanale fournie par la station de base côté NR (301) ;
la recherche des cellules voisines NR d'un emplacement actuel, et l'envoi des informations de mesure d'une cellule voisine NR correspondante satisfaisant à une condition de seuil à la station de base côté NR (302), de manière à permettre à la station de base côté NR d'envoyer un résultat de la détermination indiquant si la cellule voisine NR correspondante prend en charge l'accès NSA à une station de base côté LTE dans le NSA sur la base des informations de mesure ; et
sur la base du résultat de la détermination, la migration vers la cellule voisine NR correspondante en réponse à une instruction de transfert envoyée par la station de base côté LTE dans le NSA.

12. Procédé de migration selon la revendication 11, dans lequel, en réponse à la détection d'une cellule voisine NR ayant une meilleure qualité de signal qu'une cellule NR actuelle, la qualité de signal de la cellule voisine NR est comparée à la condition de seuil.

13. Support de stockage lisible par ordinateur, comprenant un programme stocké qui, lorsqu'il est exécuté par un processeur, dans lequel le programme stocké amène une station de base côté LTE en NSA à exécuter toutes les étapes du procédé de migration selon l'une quelconque des revendications 1 à 7 lorsqu'il est exécuté par un processeur associé à la station de base côté LTE ; ou amène une station de base côté NR en NSA à exécuter toutes les étapes du procédé de migration selon l'une quelconque des revendications 8 à 10 lorsqu'il est exécuté par un processeur associé à la station de base côté NR ; ou amène un terminal en mode mixte à double connexion en NSA à exécuter toutes les étapes du procédé de migration selon l'une quelconque des revendications 11 à 12 lorsqu'il est exécuté par un processeur associé au terminal en mode mixte.

14. Station de base côté LTE (10), comprenant une mémoire (12), un processeur (11) et un programme informatique stocké dans la mémoire (12) et exécutable par le processeur (11) qui, lorsqu'il est exécuté par le processeur, amène la station de base côté LTE (10) à exécuter le procédé de migration selon l'une quelconque des revendications 1 à 7.

15. Station de base côté NR (10), comprenant une mémoire (12), un processeur (11) et un programme informatique stocké dans la mémoire (12) et exécutable par le processeur (11) qui, lorsqu'il est exécuté par le processeur, amène la station de base côté NR (10) à exécuter le procédé de migration selon l'une quelconque des revendications 8 à 10.

16. Terminal mobile à mode mixte (20), comprenant une mémoire (22), un processeur (21) et un programme informatique stocké dans la mémoire (22) et exécutable par le processeur (21) qui, lorsqu'il est exécuté par le processeur (21), amène le terminal mobile à mode mixte (20) à exécuter le procédé de migration selon l'une quelconque des revendications 11 à 12.
